# EUROPEAN PATENT SPECIFICATION

(11) **EP 4 426 644 B1**
(45) Date of publication and mention of the grant of the patent: **24.12.2025**
(21) Application number: 23738574.5
(22) Date of filing: 26.05.2023
(51) Int. Cl.: C01B 33/12

(54) **PROCESS FOR BLEACHING DIATOMACEOUS EARTH**
VERFAHREN ZUM BLEICHEN VON KIESELGUR
PROCÉDÉ DE BLANCHIMENT DE LA TERRE DE DIATOMÉES

(30) Priority: 17.10.2022 PL 44254422
(43) Date of publication of application: 11.09.2024
(73) Proprietor: POLITECHNIKA WARSZAWSKA, 00-661 Warszawa (PL); Uniwersytet Im. Adama Mickiewicza W Poznaniu, 61-712 Poznan (PL)
(72) Inventor: PRZEKOP, Robert, 62-002 Suchy Las (PL); KURZYDLOWSKI, Krzysztof, 18-100 apy (PL); DOBRUCKA, Renata, 60-218 Poznan (PL); DOBROSIELSKA, Marta, 61-619 Poznan (PL)
(74) Representative: JWP Patent & Trademark Attorneys
(86) International application number: PCT/IB2023/055415
(87) International publication number: WO 2024/084294

(56) References cited:
- WO-A2-2012/049527
- CN-A- 104 326 476

## Description

### Technical Field

The subject of the invention is a method for bleaching diatomaceous earth

### Background Art

Diatomaceous earth is a sedimentary rock of organic origin formed due to the accumulation of organic debris or the precipitation of chemical substances resulting from the physiological changes of organisms, mainly single-cell algae (diatoms). Usually, diatomaceous earth is formed as a sediment in cold waters.

Diatomaceous earth consists mainly of amorphous SiO₂ silica and an admixture of crystalline silica. However, diatomaceous earth due to the presence of other organisms may also contain detrital quartz and calcite, glauconite, argillaceous substances, and iron compounds. Diatomaceous earth has been used in many industries, e.g., as a filtering, bleaching, dehydrating agent, as a fire resistant, insulating material, as an absorbent of liquid artificial fertilizers, disinfectants, and insecticides, in the production of paints, varnishes, cosmetics and in products intended for contact with food.

In the prior art, methods for bleaching diatomaceous earth comprising a calcination process, consisting in roasting the material to cause partial decomposition of the material with the release of water or other substances from its structure, are known.

CN101486467A discloses a method for obtaining white diatomaceous earth. The claimed method comprises calcination of the diatomaceous earth at a temperature from 700°C to 1100°C for 4 to 8 hours, wherein the diatomaceous earth further comprises from 3% to 10% of an auxiliary agent such as: Na₂CO₃, CaCOs, NaCl, CaCl₂, MgCOs, MgCl₂, NaOH or selected mixtures.

US4325844A relates to an energy-efficient method for calcining diatomaceous earth. In this method, diatomaceous earth is used to make small beads containing from 15% to 50% water, and then calcined at a temperature of from 923°C to 1290°C. Optionally, the calcined material can also comprise bleaching agents, such as phosphoric acid, and the calcination process itself is carried out in a rotary tube furnace.

CN1322673A discloses a method of purifying diatomaceous earth, consisting in washing and heating the starting material with sulfuric acid at a temperature of from 500°C to 550°C for 1 to 1.5 h and subsequent firing at a temperature from 220°C to 280°C for 2 to 2.5 h.

WO2012/049527A2 discloses reacting diatomaceous earth with hydrochloric acid at a temperature from 62°C to 108°C. Nitric acid can be used instead of **HCl.**

The purpose of the invention is to develop an energy-efficient method for bleaching diatomaceous earth.

### Summary of Invention

The object of the invention is a method for bleaching diatomaceous earth consisting in heating diatomaceous earth at elevated temperature, characterized in that it comprises a step of reacting diatomaceous earth with a mixture of hydrochloric acid and nitric acid at a temperature from 62°C to 108°C, followed by a step of filtering and drying diatomaceous earth.

Preferably, the ratio of diatomaceous earth to the mixture of hydrochloric acid and nitric acid is 1:6 w/v*.*

Preferably, the concentration of hydrochloric acid and nitric acid is 35-38 wt % and 98-99.5 wt %, respectively.

Preferably, the volume ratio of hydrochloric acid to nitric acid in the mixture is 3:1.

Preferably, the reaction is carried out for 6-12 h.

Preferably, drying is carried out at a temperature of 60-80°C.

Preferably, drying is carried out for 24-36 h.

Bleaching of diatomaceous earth was carried out on diatomaceous earth obtained from freshwater deposits.

### Description of Embodiments

The present invention is presented in more detail in embodiments which do not limit its scope.

### Examples

### Method for bleaching diatomaceous earth using the wet method

200 g of amorphous diatomaceous earth was reacted with 200 ml of 35% HCl or a 900 ml mixture of 35% HCl and 300 ml of 98% HNO₃. Reactions were carried out in the temperature range 62°C-108°C for a period of 8 h. After the reaction, the diatomaceous earth was dried for 24 h at 75°C.

Colour measurement was carried out using the EnviSense NR60CP colorimeter, using the CIELAB system (L*a*b*). The obtained results are shown in Table 1.

### Comparative Example

### Method for bleaching diatomaceous earth using the dry method

The amorphous diatomaceous earth was subjected to a calcination process with argon flow (tube furnace) or air flow (muffle furnace). Samples were exposed to the temperature range 750°C-1000°C for a period of 6 h. The research was carried out in several configurations indicated in Table 1.

Colour measurement was carried out using the EnviSense NR60CP colorimeter, using the CIELAB system (L*a*b*). Results acquired using dry method are given in Table 1.

**Table 1**

| **DRY METHOD** | | | | |
|---|---|---|---|---|
| **Sample Name** | **Parameter** | **Average parameter value** | **ΔE** | **ΔL** |
| Base diatoms | L | **90.89** | - | - |
| | a | **0.32** | | |
| | b | **6.27** | | |
| Base diatoms, muffle furnace 1000°C, Air | L | 84.95 | 13.43 | -5.94 |
| | a | 6.97 | | |
| | b | 16.32 | | |
| Base diatoms, tube furnace 800°C, Ar, vicinity of Aq/Al. | L | 84.38 | 10.09 | -6.51 |
| | a | 4.55 | | |
| | b | 12.71 | | |
| Base diatoms, tube furnace 800°C, Ar, immediate vicinity of Aq/Al. | L | **89.79** | 2.22 | -1.10 |
| | a | **1.23** | | |
| | b | **7.97** | | |
| Base diatoms 800°C, air | L | 83.28 | 10.55 | -7.61 |
| | a | 4.18 | | |
| | b | 12.47 | | |
| Base diatoms 750°C, immediate vicinity of Ag, air | L | 84.13 | 10.20 | -6.76 |
| | a | 4.60 | | |
| | b | 12.60 | | |
| Base diatoms, vicinity of Al, 750°C, air | L | 70.31 | 22.39 | -20.58 |
| | a | 6.00 | | |
| | b | 13.01 | | |
| Base diatoms, immediate vicinity of Al, 750°C, air | L | 85.97 | 5.28 | -4.92 |
| | a | 1.56 | | |
| | b | 7.73 | | |

| **WET METHOD** | | | | |
|---|---|---|---|---|
| **Sample Name** | **Parameter** | **Average parameter value** | **ΔE** | **ΔL** |
| Base diatoms | L | 90.89 | - | - |
| | a | 0.32 | | |
| | b | 6.27 | | |
| Base diatoms, aqua regia | L | 94.11 | 4.44 | 3.22 |
| | a | -0.19 | | |
| | b | 3.26 | | |
| Fractionated diatoms (narrow range of particle size), aqua regia | L | 93.58 | 6.48 | 2.69 |
| | a | -1.32 | | |
| | b | 0.61 | | |
| Base diatoms, HCl | L | 92.97 | 4.03 | 2.08 |
| | a | -0.21 | | |
| | b | 2.86 | | |

| | | | | |
|---|---|---|---|---|
| ΔE - total colour difference; ΔL - brightness difference; L - brightness; a - colour from green to magenta; b - colour from blue to yellow; o base diatoms - amorphous diatomaceous earth; fractionated diatomaceous earth - amorphous diatomaceous earth subjected to a fractionation process, divided into a fraction with a narrow particle size range. | | | | |

Bleaching using the dry method led to the conclusion that the appropriate configuration of the samples placed in the tube furnace had a significant impact on the calcination process and, as a result, a change in the luminescence of the diatomaceous earth, i.e., a decrease in the brightness value. The wet method using 35% HCl increased the brightness of the obtained samples (L=92.97). The mixture of HCl and HNO₃ acids used in this method increased the value of the L parameter to 94.11.

## Claims

1. A method for bleaching diatomaceous earth consisting in heating diatomaceous earth at elevated temperature, wherein it comprises the following steps:
a) diatomaceous earth is reacted with a mixture of hydrochloric acid and nitric acid at a temperature from 62°C to 108°C;
b) diatomaceous earth is filtered off and dried.

2. The method according to the claim 1, wherein the ratio of diatomaceous earth to the mixture of hydrochloric acid and nitric acid is 1:6 w/v.

3. The method according to the claim 1 or 2, wherein the concentration of hydrochloric acid and nitric acid is 35-38% and 98-99.5%, respectively.

4. The method according to the claim 1 or 2 or 3, wherein the volume ratio of hydrochloric acid to nitric acid in the mixture is 3:1.

5. The method according to any of the claims 1-4, wherein that the reaction is carried out for 6-12 h.

6. The method according to any of the claims 1-5, wherein drying is carried out at a temperature of 60-80°C.

7. The method according to any of the claims 1-6, wherein the drying is carried out for 24-36 h.

## Patentansprüche

1. Das Verfahren zum Bleichen von Diatomeenerde, bestehend aus Erhitzen von Diatomeenerde bei erhöhter Temperatur, wobei es die folgenden Schritte umfasst:
a) Diatomeenerde wird mit einem Gemisch aus Salzsäure und Salpetersäure bei einer Temperatur von 62°C bis 108°C umgesetzt;
b) Diatomeenerde wird abfiltriert und getrocknet.

2. Das Verfahren nach Anspruch 1, wobei das Verhältnis von Diatomeenerde zu dem Gemisch aus Salzsäure und Salpetersäure 1:6 G/V beträgt.

3. Das Verfahren nach Anspruch 1 oder 2, wobei die Konzentration von Salzsäure und Salpetersäure 35-38 % bzw. 98-99,5 % beträgt.

4. Das Verfahren nach Anspruch 1 oder 2 oder 3, wobei das Volumenverhältnis von Salzsäure zu Salpetersäure in der Mischung 3:1 beträgt.

5. Das Verfahren nach einem der Ansprüche 1-4, wobei die Reaktion für 6-12 h durchgeführt wird.

6. Das Verfahren nach einem der Ansprüche 1-5, wobei das Trocknen bei einer Temperatur von 60-80°C durchgeführt wird.

7. Das Verfahren nach einem der Ansprüche 1-6, wobei das Trocknen für 24-36 h durchgeführt wird.

## Revendications

1. Procédé pour le blanchiment de la terre de diatomées consistant en chauffer la terre de diatomées à une température élevée, le procédé comprenant les étapes suivantes :
a) la terre de diatomées est réagi avec un mélange de l'acide chlorhydrique et de l'acide nitrique à une température de 62°C à 108°C;
b) la terre de diatomées est filtrée et séchée.

2. Procédé selon la revendication 1, dans lequel le rapport de la terre de diatomées au mélange de l'acide chlorhydrique et de l'acide nitrique est 1:6 p/v.

3. Procédé selon la revendication 1 ou 2, dans lequel la concentration de l'acide chlorhydrique et de l'acide nitrique est de 35-38% et de 98-99,5%, respectivement.

4. Procédé selon la revendication 1 ou 2 ou 3, dans lequel le rapport au volume de l'acide chlorhydrique à l'acide nitrique dans le mélange est de 3:1.

5. Procédé selon l'une quelconque des revendications 1-4, dans lequel la réaction s'effectue pendant 6-12 heures.

6. Procédé selon l'une quelconque des revendications 1-5, dans lequel le séchage s'effectue à une température de 60-80°C.

7. Procédé selon l'une quelconque des revendications 1-6, dans lequel le séchage s'effectue pendant 24-36 heures.
